(19) Europäisches Patentamt
European Patent Office
Office européen des brevets

(11) Publication number : **0 382 227 B1**

# (12) EUROPEAN PATENT SPECIFICATION

(45) Date of publication of patent specification : **05.05.93 Bulletin 93/18**

(51) Int. Cl.$^5$ : **C09D 11/02,** C09B 31/16, C09B 33/18, C09B 35/36, C09B 35/38

(21) Application number : **90102515.5**

(22) Date of filing : **08.02.90**

## (54) Ink, and recording process making use of it.

(30) Priority : **09.02.89 JP 28766/89**

(43) Date of publication of application : **16.08.90 Bulletin 90/33**

(45) Publication of the grant of the patent : **05.05.93 Bulletin 93/18**

(84) Designated Contracting States : **AT BE CH DE DK ES FR GB GR IT LI LU NL SE**

(56) References cited :
**DE-A- 3 330 379**
**DE-B- 2 305 616**

(73) Proprietor : **CANON KABUSHIKI KAISHA**
**30-2, 3-chome, Shimomaruko, Ohta-ku**
**Tokyo (JP)**

(72) Inventor : **Eida, Tsuyoshi**
**1-33, Konandai 6-chome, Konan-ku**
**Yokohama-shi, Kanagawa-ken (JP)**
Inventor : **Saito, Megumi**
**16-1, Hisamoto, Takatsu-ku**
**Kawasaki-shi, Kanagawa-ken (JP)**
Inventor : **Shirota, Katsuhiro**
**Runeinagi 913, 153-2, Yanokuchi**
**Inagi-shi, Tokyo (JP)**
Inventor : **Yamaomoto, Takao**
**14-24, Sakuradai 4-chome**
**Isehara-shi, Kanagawa-ken (JP)**

(74) Representative : **Blumbach Weser Bergen Kramer Zwirner Hoffmann Patentanwälte**
**Radeckestrasse 43**
**W-8000 München 60 (DE)**

EP 0 382 227 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### Field of the Invention

The present invention relates to an ink, and a recording process making use of it. More particularly, it relates to a water-based ink capable of giving a black image improved in indoor color change resistance, and a recording process, in particular, ink-jet recording process, making use of it.

#### Related Background Art

Water-based inks comprising a water-soluble dye dissolved in a water-based medium have been hitherto used as inks used in fountain pens and felt pens and inks used for ink-jet recording. In these water-based inks, water-soluble organic solvents are commonly added so that pen points or ink ejection nozzles can be prevented from being clogged with ink.

It is required for these conventional inks to give an image with a sufficient density, not to cause any clogging at pen points or nozzles, to have good drying properties on recording mediums, to cause less feathering, to have excellent shelf stability, and, particularly in ink-jet recording systems utilizing heat energy, to have excellent thermal resistance. It is also required for the image formed to have a satisfactory light-fastness and water fastness.

Inks with various hues are also prepared from dyes with various hues. Of these, black inks, which are used in both monochromatic and full-color images, are most important inks. As dyes for these black inks, C.I. Food Black 2 has been mainly used taking account of various performances (see Japanese Laid-Open Patent Application No. 59-93766 and No. 59-93768).

Among the various required performances, what is particularly important is the fastness of the images formed.

In regard to the fastness of images, hitherto mainly questioned is the color fading due to direct sunlight or every kind of illumination light. Such a problem of color-fading has been attempted to be settled by the selection of dyes having superior light-fastness.

Recently, however, a problem of color changes of images has become important in addition to the above color fading. Namely, images formed by conventional inks have not only the problem of color fading but also the problem of color changes. The color changes refer to changes in hues with, however, less changes in density, and what is important in black inks particularly used in a largest quantity is a problem of the browning that black turns brown. In particular, in the instance of full-color images, this browning results in a great lowering of image quality.

This problem of browning also occurs indoors without exposure to direct sunlight. The color change is also accelerated depending on the types of recording mediums on which images are formed, and this problem of browning has been unavoidable in respect of the C.I. Food black 2 that has been hitherto widely used.

In particular, so-called coated papers comprises a substrate such as paper and formed thereon an ink-receiving layer containing a pigment and a binder, for the purpose of improving the color-forming performance of ink and the image quality such as sharpness and resolution. In such an instance, the browning may seriously occur even with use of inks that may cause less problem of color change in the instance of plain papers. This problem has been unsettled by the mere selection of dyes having superior light-fastness.

### SUMMARY OF THE INVENTION

Accordingly, an object of the present invention is to provide an ink that can satisfy the performances commonly required as mentioned above and also may not cause browning even on the coated papers, and a recording process making use of this ink.

The above object can be achieved by the present invention as described below.

The present invention is an ink, and a recording process making use of the ink, containing at least a dye and a liquid medium, wherein said dyes is a dye represented by the following Formula (I):

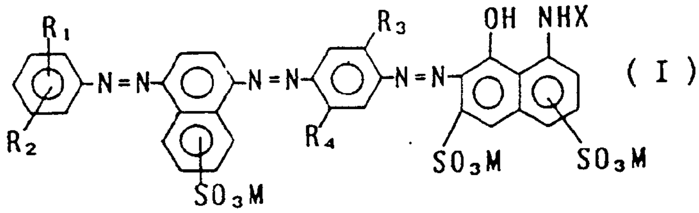

wherein $R_1$ and $R_2$ each represent hydrogen atom, a methyl group, a methoxy group or $-SO_3M$, $R_3$ and $R_4$ each represent a methyl group, methoxy group or an acetylamino group; X represents an acetyl group, a benzoyl group, $-SO_2C_6H_5$, $-SO_2C_6H_4-CH_3$, or

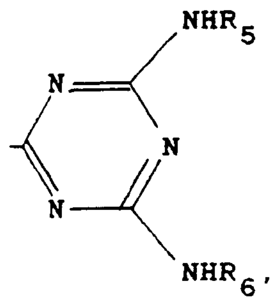

where $R_5$ and $R_6$ each represent a hydrogen atom, or $-C_2H_4OH$; and M represents an alkali metal, an ammonium group, or an organic ammonium group.

## DETAILED DESCRIPTION OF THE PREFERRED EMBODIMENTS

Use of the dye of the above Formula (I) as the dye for the ink makes it possible to provide a black ink capable of giving an image that may not cause the indoor color changes, i.e., the browning, even when the coated papers are used.

In the recording process of the present invention, use of the above ink makes it possible to provide a black image that may cause less browning on the coated papers.

The present invention will be described below in greater detail by giving preferred embodiments.

Black dyes used in the present invention may all commonly comprise sodium salts of water-soluble groups such as a sulfonic acid group. In the present invention, however, they are not limited to the sodium salts, and the same effect can be obtained also when the counter ion thereof is potassium, lithium, ammonia, organic amine, or the like. Thus, the dyes containing any of these other counter ions are also included in the present invention.

Examples of the dye represented by the above Formula (I) include the following dyes, but are by no means limited to these.

No. 1

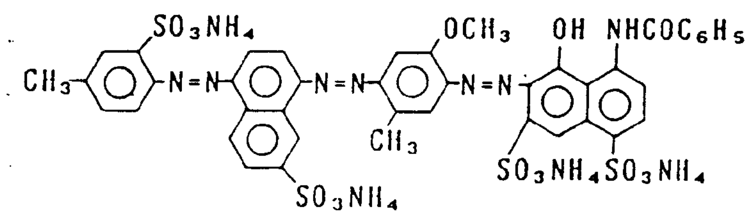

No. 2

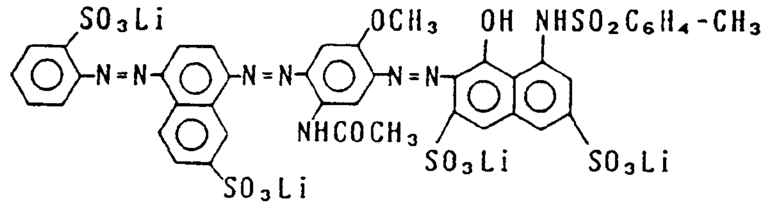

No. 3

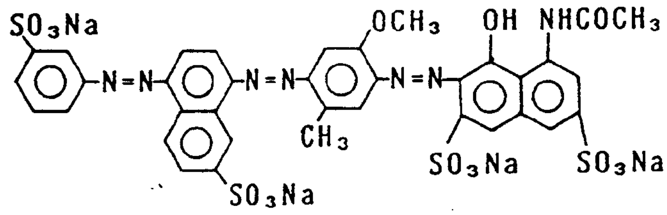

No. 4

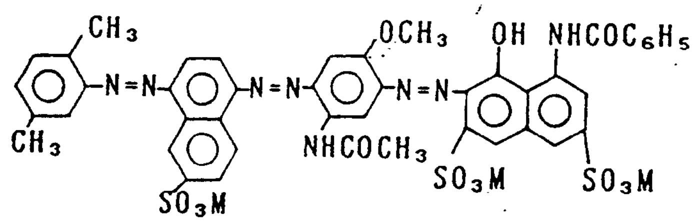

(M=$NH_3C_2H_4OH$)

No. 5

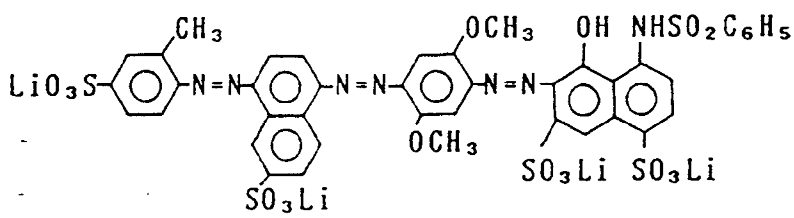

No. 6

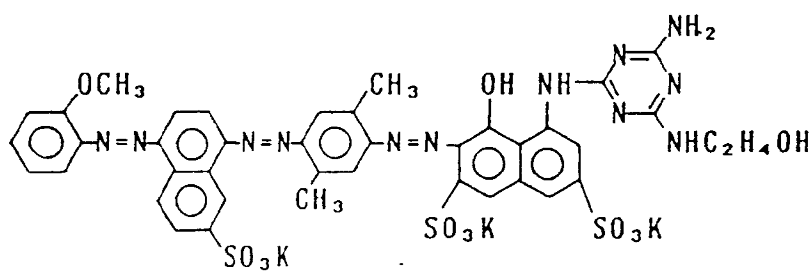

In the above dyes, particularly preferable dyes are the dyes wherein $R_1$ and $R_2$ each are selected from the group consisting of a methyl group, a methoxy group and $-SO_3M$ respectively,
$R_3$ and $R_4$ each are selected from the group consisting of a methyl group, acetyl group and amino group respectively,
X is selected from the group consisting of benzoyl group, $-SO_2C_6H_5$ and

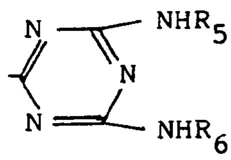

and $R_5$ and $R_6$ each are selected from the group consisting of a hydrogen atom and $-C_2H_4OH$.

The dyes as exemplified in the above can be prepared following the syntheses of azo dyes known in the art. An example of the synthesis of the above No. 2 dye will be described below.

In 100 mℓ of water, 0.1 mol of o-anilinesulfonic acid is diazotized according to a conventional method, and then coupled with 0.1 mol of 1-naphthylamine-7-sulfonic acid. The product is further diazotized using sodium nitrite. In a mixed solution of 100 mℓ of water and 0.2 mol of hydrochloric acid, 0.1 mol of 5-acetylamino-o-anisidine is dissolved, and the above diazotized solution is added thereto to carry out reaction at a pH of 5 to 6 and a temperature of 5 to 10°C. Thereafter sodium chloride is added to effect salting out, followed by filtration to give a paste. The paste is diazotized in water and, at pH 8 to 9, reacted with 0.1 mol of N-p-toluenesulfonyl H-acid prepared following the method as disclosed in Yutaka Hosoda, SENRYO KAGAKU (Dye Chemistry), Gihodo, p.536. Next, lithium chloride is added to effect salting out, and a precipitate of the dye is filtered. This operation of salting-out is repeated several times to remove impurities and at the same time convert the sulfonic acid group of the dye to a lithium salt type, followed by desalting purification by the use of an ultrafiltration machine (manufactured by Saltrius Co.). The above No. 2 dye is thus obtained.

There are no particular limitations on the amount of the dye to be used in the ink of the present invention. In general, however, it may be an amount that holds from 0.1 to 15 % by weight, preferably from 0.3 to 10 % by weight, and more preferably from 0.5 to 6 % by weight, based on the total weight of the ink.

The aqueous medium preferably used in the ink of the present invention is water, or a mixed solvent of water with a water-soluble organic solvent. Particularly preferably used is the mixed solvent of water with a water-soluble organic solvent, containing as the water-soluble organic solvent a polyhydric alcohol having the effect of preventing the ink from drying. As the water, it is preferred not to use commonly available water containing various ions, but to use deionized water.

The water-soluble organic solvent used by mixture with the water includes, for example, alkyl alcohols having 1 to 5 carbon atoms, such as methyl alcohol, ethyl alcohol, n-propyl alcohol, isopropyl alcohol, n-butyl alcohol, sec-butyl alcohol, tert-butyl alcohol, isobutyl alcohol, and n-pentanol; amides such as dimethylformamide and dimethylacetamide; ketones or ketoalcohols such as acetone and diacetone alcohol; ethers such as tetrahydrofuran and dioxane; polyalkylene glycols such as polyethylene glycol and polypropylene glycol; alkylene glycols comprising an alkylene group having 2 to 6 carbon atoms, such as ethylene glycol, propylene glycol, butylene glycol, triethylene glycol, 1,2,6-hexanetriol, thiodiglycol, hexylene glycol, and diethylene glycol; glycerol; lower alkyl ethers of polyhydric alcohols, such as ethylene glycol monomethyl or monoethyl ether, diethylene glycol monomethyl or monoethyl ether, and triethylene glycol monomethyl or monoethyl ether; lower dialkyl ethers of polyhydric alcohols, such as triethylene glycol dimethyl or diethyl ether and tetraethylene glycol dimethyl or diethyl ether; sulfolane, N-methyl-2-pyrrolidone, and 1,3-dimethyl-2-imidazolidinone.

Suitable solvents are selected from the organic solvents as described above and put into use. Particularly important from the view point of preventing the clogging with ink is glycerol or a polyethylene oxide with a degree of polymerization of 2 to 6. Taking account of image density and ejection stability, preferred are nitrogen-containing cyclic compounds such as N-methyl-2-pyrrolidone or 1.3-dimethyl-2-imidazolidinone or monoether compounds of polyalkylene oxides such as diethylene glycol monomethyl ether and triethylene glycol monomethyl ether. Further taking account of frequency response, it is preferred to use lower alcohols such as ethyl alcohol, isopropyl alcohol or surface active agents. Hence, the solvent composition preferred in the present invention is the composition in which all the components as described above are contained in addition to the water.

The above water-soluble organic solvent may be contained in the ink in an amount of generally from 2 to 80 % by weight, preferably from 3 to 70 % by weight, and more preferably from 4 to 60 % by weight, based on the total weight of the ink.

The water to be used may be in a proportion such that it holds not less than 35 % by weight, and preferably not less than 45 % by weight, of the whole ink. An excessively small amount of water may result in a large quantity of a low-volatile organic solvent remaining in the image formed, undesirably causing the problems of migration of dyes, feathering of images, and so forth.

In addition to the above components, the ink of the present invention may also optionally contain pH adjustors, viscosity modifiers, surface tension modifiers, and so forth. The pH adjustors used in the above ink include, for example, all sorts of organic amines such as diethanolamine and triethanolamine, inorganic alkali

agents such as oxides of alkali metals as exemplified by sodium hydroxide, lithium hydroxide and potassium hydroxide, organic acid salts such as lithium acetate, organic acids, and mineral acids.

The ink of the present invention, as described above, may preferably have physical properties of a viscosity at 25°C, of from 1 to 20 cP, and preferably from 1 to 15 cP; a surface tension of not less than 30 dyne/cm, and preferably not less than 40 dyne/cm; and a pH of approximately from 4 to 10.

The recording process of the present invention is a recording process characterized by using the ink described above, and there are no particular limitations on the recording system and recording medium. In particular, however, particularly effective are methods in which an ink-jet system is used as the recording system and a coated paper is used as the recording medium.

The ink-jet system may include any conventionally known systems, without any particular limitations. In the present invention, however, the system as disclosed in Japanese Laid-Open Patent Application No. 54-59936 is particularly useful, which is a system in which heat energy is acted on an ink to cause therein an abrupt volume change and the ink is ejected from a nozzle by the force of action attributable to this change in state.

As the recording medium used in the present invention, any recording mediums can be used such as commonly available plain papers such as wood free papers, coated papers, and plastic films for OHP or the like. A remarkable effect can be exhibited particularly when the coated papers are used.

The coated papers refer to those which are comprised of wood free paper used as a substrate, and provided on the surface thereof an ink-receiving layer comprising a pigment and a binder, aiming at improvements in the color-forming properties attributable to ink, sharpness, and dot shapes.

In the case of these coated papers, those which employs as the pigment a fine pigment such as synthetic silica having a BET specific surface area of from 35 to 650 $m^2/g$ can provide images having excellent color-forming properties and sharpness. When conventional inks are used, however, the image formed particularly with black ink may seriously cause the problem of browning with lapse of time though its theoretical reasons are unknown, and great problems are also caused in not only black monochromatic images but also full-color images. Similar problems are also caused in recording mediums comprised of, like these coated papers, a paper substrate and provided thereon a thin layer comprising a pigment and a binder, where fibers of the paper that constitutes the substrate are present in this layer in a mixed state.

Use of the ink of the present invention does not cause the problems of browning as discussed above even when monochromatic images or full-color images are formed on the coated papers as mentioned above. Thus, the process according to the present invention can provide recorded images that may not bring about any indoor color change for a long period of time, when using not only the coated papers employing the pigment having a BET specific surface area of from 35 to 650 m2/g, but also coated papers employing a pigment having a BET specific surface area smaller than that, and also plain papers and any other recording mediums.

The recording processes according to the ink-jet system and the various recording mediums are known in the art, or proposed in variety by the present applicants and others. These recording processes and the recording mediums can all be used in the present invention as they are.

## EXAMPLES

The present invention will be described below in detail by giving Examples and Comparative Examples. In the following, "%" is by weight unless particularly mentioned.

(1) Ink Preparation Examples:

Components as shown below were mixed, thoroughly stirred and dissolved, followed by pressure filtration using Fluoropore Filter (trademark; available from Sumitomo Electric Industries, Ltd.) with a pore size of 0.45 μm, to prepare inks of the present invention.

### Example 1

| | |
|---|---|
| Exemplary Dye No. 1 | 3 % |
| Diethylene glycol | 17 % |
| Water | 80 % |

Example 2

| | |
|---|---|
| Exemplary Dye No. 2 | 4 % |
| Glycerol | 14 % |
| Diethylene glycol monomethyl ether | 12 % |
| Water | 70 % |

Example 3

| | |
|---|---|
| Exemplary Dye No. 3 | 4 % |
| Ethyl alcohol | 5 % |
| Diethylene glycol | 15 % |
| N-methyl-2-pyrrolidone | 10 % |
| Water | 66 % |

Example 4

| | |
|---|---|
| Exemplary Dye No. 4 | 3 % |
| Glycerol | 20 % |
| Emulgen 985 (trade name; available from Kao Corporation) | 0.05 % |
| Water | 76.95 % |

Example 5

| | |
|---|---|
| Exemplary Dye No. 5 | 4 % |
| Diethylene glycol | 15 % |
| 1,3-Dimethyl-2-imidazolidinone | 10 % |
| Water | 71 % |

Example 6

| | |
|---|---|
| Exemplary Dye No. 6 | 3 % |
| Glycerol | 10 % |
| n-Propanol | 10 % |
| Water | 77 % |

(2) Use Examples:

The inks of Examples 1 to 6 were each set on an ink-jet printer BJ-80A (a manufacture of Canon Inc.; nozzle size: 50 x 40 μm; nozzle number: 24) that utilizes a heating element as an ink ejection energy source, and printing was carried out on the following recording mediums A to C, under which evaluation was made on the clogging observed when the printing was stopped for a while and then again started, the performance of recovery from the clogging, observed when the printing was stopped for a long term and then again started, and the color change resistance.

| | |
|---|---|
| Recording medium A: | Ink-jet coated paper, NM (trade name; available from Mitsubishi Paper Mills, Ltd.) |
| Recording medium B: | Ink-jet coated paper, FC-3 (trade name; available from Jujo Paper Co., Ltd. |
| Recording medium C: | Copy paper, Canon PAPER DRY (trade name; available from Canon Sales Inc.) |

(3) Evaluation Method and Evaluation Results:

(i) Clogging observed when the printing was stopped for a while and then again started:

Judgement was made on whether defective prints such as blurs and chips of characters are seen or not, when the printing was stopped after alphanumeric characters were continuously printed on the recording medium C for 10 minutes using the printer filled with a given ink, and then the alphanumeric characters were again printed after the ink was left to stand for 10 minutes without capping on the nozzle or the like (which was left to stand at 20 ± 5°C under 50 ± 10 % RH). As a result, no defective prints were seen.

(ii) Performance of recovery from clogging observed when the printing was stopped for a long term and then again started:

Judgement was made on how many times the operation for recovery had to be repeated to enable normal printing free from blurs or chips of characters, when the printing was stopped after alphanumeric characters were continuously printed on the recording medium C for 10 minutes using the printer filled with a given ink, and the operation for recovery of the clogging of nozzles were carried out after the ink was left to stand for 7 days without capping on the nozzle or the like (which was left to stand at 60°C under 10 ± 5 % RH). As a result, normal printing became possible after the recovery operation was made once to five times.

(iii) Color change resistance:

Black solid patterns of 10 mm x 30 mm were each printed on the recording mediums A, B and C. Thereafter, as a color change promotion means, the print was left to stand for 30 minutes in a light-intercepted chamber in which the density of ozone was always kept within the range of 0.1 ± 0.05 % by volume, and the color differences ΔE∗ab after and before the test were measured (according to JIS Z8730). As a result, the ΔE∗ab was found to be not more than 5 in all instances.

(4) Comparative Examples:

The above Examples were repeated to prepare 6 kinds of inks, except that the dyes used in the above Ink Formulation Examples 1 to 6 were replaced with C.I. Food Black 2, C.I. Direct Black 62, C.I. Direct Black 118, C.I. Acid Black 24, C.I. Acid Black 26, and C.I. Acid Black 60, respectively. Then the above Use Example was repeated using the recording apparatus to give black solid prints on the recording mediums A and B. Using the resulting prints as test pieces, similar tests were carried out using the above ozone test chamber. As a result, the ΔE∗ab was found to be not less than 15 in all instances.

As described in the above, the present invention has made it possible to form an image not only having superior performances such as clogging resistance of inks, as generally required, but also having superior color change resistance.

## Claims

**1.** An ink comprising a dye and a liquid medium, wherein said dye is a dye represented by the following Formula (I):

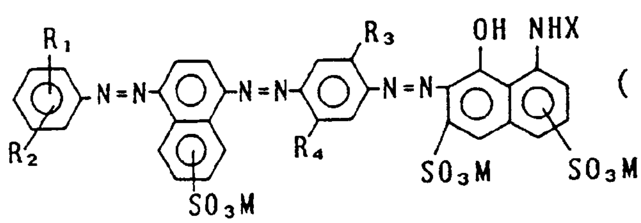

(I)

wherein $R_1$ and $R_2$ each represent hydrogen atom, a methyl group, a methoxy group or $-SO_3M$, $R_3$ and $R_4$ each represent a methyl group, methoxy group or an acetylamino group; X represents an acetyl group, a benzoyl group, $-SO_2C_6H_5$, $-SO_2C_6H_4-CH_3$, or

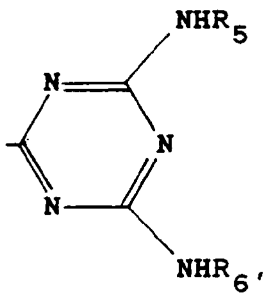

where $R_5$ and $R_5$ each represent a hydrogen atom, or $-C_2H_4OH$; and M represents an alkali metal, an ammonium group, or an organic ammonium group.

2. An ink according to Claim 1, wherein said dye is contained in an amount ranging from 0.1 to 15 % by weight based on the total weight of the ink.

3. An ink according to Claim 1, wherein said liquid medium comprises a water-soluble organic solvent and water.

4. An ink according to Claim 3, wherein said water-soluble organic solvent is contained in an amount ranging from 2 to 80 % by weight based on the total weight of the ink.

5. An ink according to Claim 3, wherein said water is contained in an amount of at least 35 % by weight based on the total weight of the ink.

6. An ink-jet recording process comprising applying an ink to a recording medium, said ink comprising a dye and a liquid medium, wherein said dyes is a dye represented by the following Formula (I):

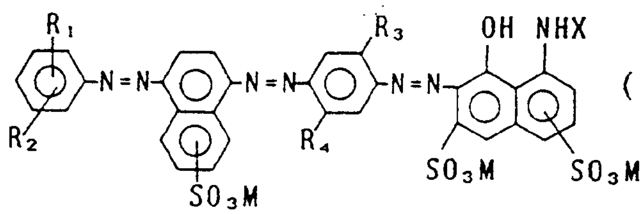

( I )

wherein $R_1$ and $R_2$ each represent hydrogen atom, a methyl group, a methoxy group or $-SO_3M$, $R_3$ and $R_4$ each represent a methyl group, methoxy group or an acetylamino group; X represents an acetyl group, a benzoyl group, $-SO_2C_6H_5$, $-SO_2C_6H_4-CH_3$, or

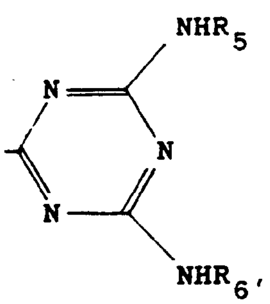

where $R_5$ and $R_5$ each represent a hydrogen atom, or $-C_2H_4OH$; and M represents an alkali metal, an ammonium group, or an organic ammonium group.

7. A recording process according to Claim 6, wherein said ink-jet recording system is a system in which heat energy is applied to the ink and ink droplets are ejected from minute openings.

8. A recording process according to Claim 6, wherein said recording medium is a recording medium having on its surface an ink-receiving layer comprising a pigment and a binder.

## Patentansprüche

1. Tinte, umfassend einen Farbstoff und ein flüssiges Medium, wobei der Farbstoff ein solcher ist, der durch die folgende Formel (I) dargestellt ist:

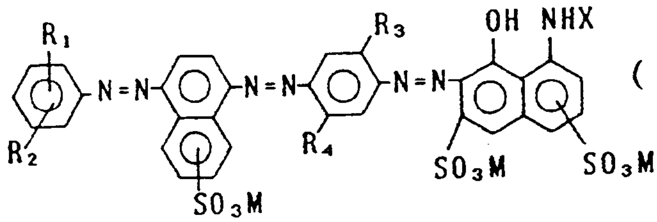

( I )

worin
$R_1$ und $R_2$ je ein Wasserstoffatom, eine Methylgruppe, eine Methoxygruppe oder $-SO_3M$ bedeuten;
$R_3$ und $R_4$ je eine Methylgruppe, Methoxygruppe oder eine Actylamingruppe bedeuten;
X eine Acetylgruppe, eine Benzoylgruppe, $-SO_2C_6H_5$, $-SO_2C_6H_4-CH_3$, oder

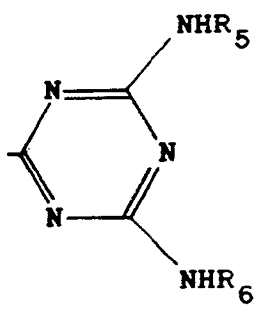

bedeutet, wobei $R_5$ und $R_5$ je ein Wasserstoffatom oder $-C_2H_4OH$ bedeuten, und
M ein Alkalimetall, eine Ammoniumgruppe oder eine organische Ammoniumgruppe bedeutet.

2. Tinte nach Anspruch 1, in der der Farbstoff in einer Menge von 0,1 bis 15 Gewichtsprozent, bezogen auf das Gesamtgewicht der Tinte, enthalten ist.

3. Tinte nach Anspruch 1, in der das flüssige Medium ein wasserlösliches organisches Lösungsmittel und Wasser umfaßt.

4. Tinte nach Anspruch 3, in der das wasserlösliche organische Lösungsmittel in einer Menge von 2 bis 80 Gewichtsprozent, bezogen auf das Gesamtgewicht der Tinte, enthalten ist.

5. Tinte nach Anspruch 3, in der das Wasser in einer Menge von wenigstens 35 Gewichtsprozent, bezogen auf das Gesamtgewicht der Tinte, enthalten ist.

6. Tintenstrahlaufzeichnungsverfahren, umfassend das Aufbringen einer Tinte auf ein Aufzeichnungsmedium, wobei die Tinte einen Farbstoff und ein flüssiges Medium umfaßt, wobei der Farbstoff ein solcher ist, der durch die folgende Formel (I) dargestellt ist:

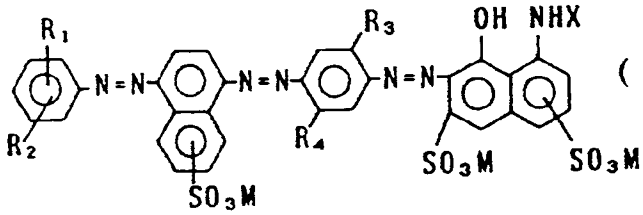

( I )

worin

$R_1$ und $R_2$ je ein Wasserstoffatom, eine Methylgruppe, eine Methoxygruppe oder $-SO_3M$ bedeuten;

$R_3$ und $R_4$ je eine Methylgruppe, Methoxygruppe oder eine Actylamingruppe bedeuten;

X eine Acetylgruppe, eine Benzoylgruppe, $-SO_2C_6H_5$, $-SO_2C_6H_4-CH_3$, oder

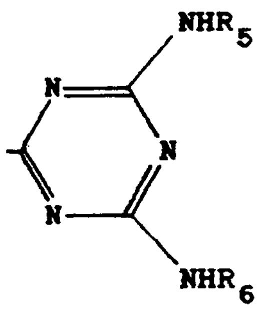

bedeutet, wobei $R_5$ und $R_5$ je ein Wasserstoffatom oder $-C_2H_4OH$ bedeuten; und

M ein Alkalimetall, eine Ammoniumgruppe oder eine organische Ammoniumgruppe bedeutet.

7. Aufzeichnungsverfahren nach Anspruch 6, bei dem das Tintenstrahlaufzeichnungssystem ein solches ist, bei dem Wärmeenergie der Tinte zugeführt wird und Tintentröpfchen aus kleinen Öffnungen ejiziert werden.

8. Aufzeichnungsverfahren nach Anspruch 6, bei dem das Aufzeichnungsmedium ein solches ist, das auf seiner Oberfläche eine Tintenempfangsschicht, die ein Pigment und ein Bindemittel umfaßt, besitzt.

## Revendications

1. Encre comprenant un colorant et un milieu liquide, dans laquelle le colorant est un colorant représenté par la formule (I) suivante :

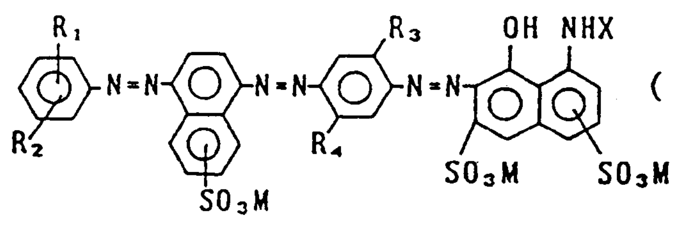

( I )

dans laquelle $R_1$ et $R_2$ représentent chacun un atome d'hydrogène, un groupe méthyle, un groupe méthoxy ou $-SO_3M$, $R_3$ et $R_4$ représentent chacun un groupe méthyle, un groupe méthoxy ou un groupe acétylamino ; X représente un groupe acétyle, un groupe benzoyle, $-SO_2C_6H_5$, $-SO_2C_6H_4-CH_3$, ou

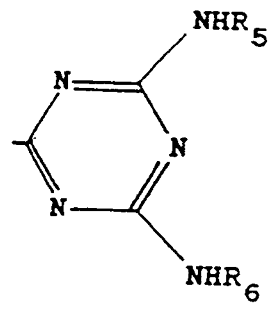

dans lequel $R_5$ et $R_6$ représentent chacun un atome d'hydrogène ou un groupe $-C_2H_4OH$ ; et M représente un métal alcalin, un groupe ammonium ou un groupe ammonium organique.

2. Encre suivant la revendication 1, dans laquelle le colorant est présent en une quantité allant de 0,1 à 15 % en poids sur la base du poids total de l'encre;

3. Encre suivant la revendication 1, dans laquelle le milieu liquide comprend un solvant organique hydrosoluble et de l'eau.

4. Encre suivant la revendication 3, dans laquelle le solvant organique hydrosoluble est présent en une quantité allant de 2 à 80 % en poids, sur la base du poids total de l'encre.

5. Encre suivant la revendication 3, dans laquelle l'eau est présente en une quantité d'au moins 35 % en poids, sur la base du poids total de l'encre.

6. Procédé d'enregistrement par jet d'encre, comprenant l'application d'une encre à un support d'enregistrement, ladite encre comprenant un colorant et un milieu liquide, le colorant étant un colorant représenté par la formule (I) suivante :

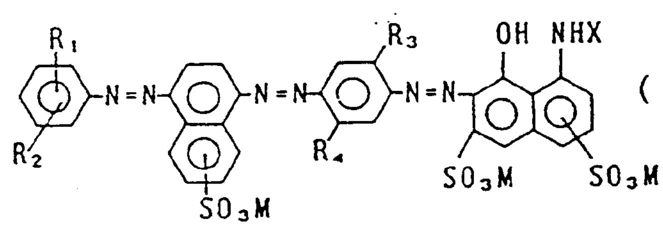
( I )

dans laquelle $R_1$ et $R_2$ représentent chacun un atome d'hydrogène, un groupe méthyle, un groupe méthoxy ou $-SO_3M$, $R_3$ et $R_4$ représentent chacun un groupe méthyle, un groupe méthoxy ou un groupe acétylamino ; X représente un groupe acétyle, un groupe benzoyle, $-SO_2C_6H_5$, $-SO_2C_6H_4-CH_3$, ou

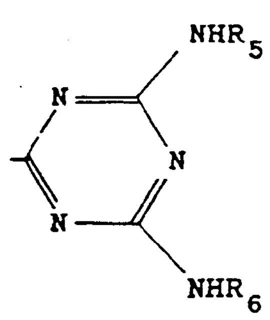

dans lequel $R_5$ et $R_6$ représentent chacun un atome d'hydrogène ou un groupe $-C_2H_4OH$ ; et M représente un métal alcalin, un groupe ammonium ou un groupe ammonium organique.

7. Procédé d'enregistrement suivant la revendication 6, dans lequel le dispositif d'enregistrement par jet d'encre est un dispositif dans lequel de l'énergie thermique est appliquée à l'encre et des gouttelettes

d'encre sont éjectées par des orifices minuscules.

8. Procédé d'enregistrement suivant la revendication 6, dans lequel le support d'enregistrement est un support d'enregistrement possédant sur sa surface une couche réceptrice d'encre comprenant un pigment et un liant.